⑲ ))) Europäisches Patentamt

European Patent Office

Office européen des brevets

(11) Veröffentlichungsnummer: **0 219 680**
**A1**

(12) **EUROPÄISCHE PATENTANMELDUNG**

(21) Anmeldenummer: **86112710.8**

(22) Anmeldetag: **15.09.86**

(51) Int. Cl.⁴: **F41G 5/14 , G01S 5/00**

(30) Priorität: **17.09.85 DE 3533041**

(43) Veröffentlichungstag der Anmeldung:
**29.04.87 Patentblatt 87/18**

(84) Benannte Vertragsstaaten:
**AT BE CH DE FR GB IT LI LU NL SE**

(71) Anmelder: **Siemens Aktiengesellschaft Berlin
und München
Wittelsbacherplatz 2
D-8000 München 2(DE)**

(72) Erfinder: **1Büttner, Winfried, Dr.-Ing.
Hunkelestrasse 17
D-8000 München 71(DE)**

(54) **Fahrzeugnavigationsanlage.**

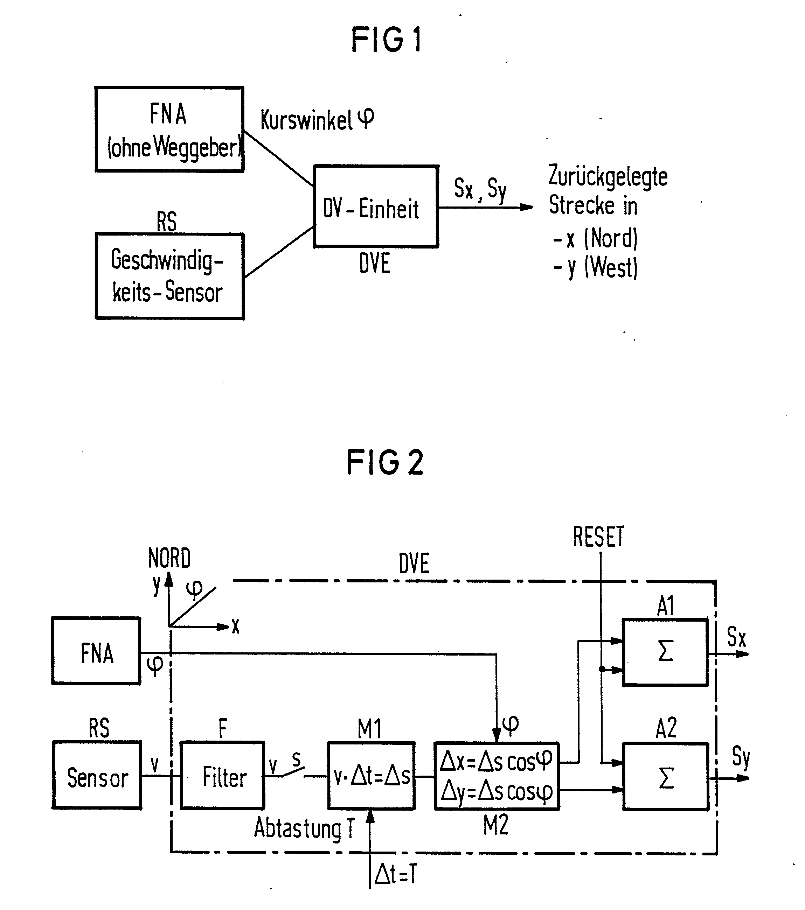

㉗ Die bordeigene Fahrzeugnavigationsanlage zur Standortbestimmung eines mobilen Waffensystems wird zusätzlich zur Durchführung der Transformation der von einer zentralen Stelle gelieferten Zieldaten eines Objektes in Anspruch genommen. Um die Auswirkung des Schlupfes der Antriebsmittel auf die Standortbestimmung auszuschalten, wird bei jeder Standortänderung die Geschwindigkeit des Fahrzeuges laufend gemessen und in einer Datenverarbeitungsschaltung zur Bestimmung des tatsächlich zurückgelegten Weges ausgewertet. (Fig. 1)

# FIG 1

EP 0 219 680 A1

FNA (ohne Weggeber) — Kurswinkel φ

RS

Geschwindig-keits-Sensor

DV-Einheit — Sx, Sy — Zurückgelegte Strecke in
-x (Nord)
-y (West)

DVE

## Fahrzeugnavigationsanlage

Die Erfindung bezieht sich auf eine Fahrzeugnavigationsanlage mit einer Einrichtung zur Bestimmung des Kurswinkels und der Fahrstrecke zur Orientierung des als Träger eines Waffensystems eingesetzten Fahrzeuges im Gefechtsfeld.

Fahrzeugnavigationsanlagen sind zur Ortsbestimmung in unbekanntem Gelände eingesetzt. Die Navigationsdaten enthalten den Kurswinkel und die gefahrene Wegstrecke des Fahrzeuges von einer Bezugsrichtung bzw. Bezugspunkt ausgemessen. Die bei Wegstreckenmessung mittels Zählung der Umdrehungszahl der Antriebsachse erzielbare Genauigkeit wird als ausreichend angesehen.

Die Zielzuweisung an in einem Gefechtsfeld operierende mobile Waffensysteme durch eine zentrale Stelle mit einem Rundsuchsensor ist nur dann sinnvoll, wenn der Standort des Waffensystems bezogen auf den Standort des Rundsuchsensors bekannt ist. Mit den Standortkoordinaten kann eine Transformation der Zieldaten des Rundsuchsensors auf den Standort des Waffensystems vorgenommen werden.

Der Erfindung liegt die Aufgabe zugrunde, bei einer Anordnung der eingangs genannten Art die Aufschaltung des Waffensystems auf ein zugewiesenes Ziel mit geringem zusätzlichen Aufwand zu ermöglichen. Gemäß der Erfindung wird diese Aufgabe dadurch gelöst, daß die mit der eige nen Fahrzeugnavigationsanlage ermittelten Standortkoordinaten zusätzlich zur Durchführung der Transformation der von einer zentralen Stelle gelieferten Zieldaten eines feindlichen Objektes in Anspruch genommen werden.

Vor allem die Genauigkeit der Wegstreckenmessung einer Fahrzeugnavigationsanlage kann jedoch aufgrund des Schlupfes der Antriebsmittel gegenüber dem Erdboden u.U. erheblich vermindert und für eine Transformation der Zieldaten ungeeignet sein. Ein größerer Unterschied zwischen dem gemessenem und dem tatsächlichen Standort verringert die Aufschaltwahrscheinlichkeit bei der Einweisung des Waffensystems deutlich. Gemäß einer vorteilhaften Weiterbildung der Erfindung wird die Auswirkung des Schlupfes auf die Standortbestimmung dadurch völlig ausgeschaltet, daß bei jeder Standortänderung die Geschwindigkeit des Fahrzeuges laufend ständig gemessen und in einer Integrationsschaltung, die Teil einer Datenverarbeitungseinrichtung ist, zum tatsächlich zurückgelegten Weg aufintegriert wird.

Gemäß einer weiteren vorteilhaften Weiterbildung der Erfindung kann die Fahrzeuggeschwindigkeit mittels eines mit dem Dopplereffekt arbeitenden Radar-oder Lasersensors ermittelt werden. Die über den Radar-bzw. Lasersensor laufend erhaltenen Geschwindigkeitsdaten des Fahrzeuges werden vorteilhafterweise zusammen mit dem von der Fahrzeugnavigationsanlage gelieferten Kurswinkel in eine Datenverarbeitungsanlage eingegeben und aus diesen Werten der zurückgelegte Weg den Koordinatenwerten x und y berechnet. Dabei kann die Datenverarbeitungsanlage ein Bestandteil der Fahrzeugnavigationsanlage sein.

Die Erfindung und weitere Einzelheiten der Erfindung werden anhand eines in den Fig. 1und 2 dargestellten Ausführungsbeispieles in den wesentlichen Teilen näher erläutert.

Es zeigen

Fig. 1 ein Blockschaltbild der erfindungsgemäßen Anordnung,

Fig. 2 ein Schaltungsbeispiel für die -schlupffreie Ermittlung der Wegstrecke.

Eine Fahrzeugnavigationsanlage FNA, wie sie in bekannter Weise zur Standortbestimmung von Fahrzeugen im Gefechtsfeld eingesetzt wird und ein Radar-oder Lasersensor RS, der am Fahrzeug angeordnet ist und gegenüber dem Erdboden laufend die Fahrzeuggeschwindigkeit ermittelt, liefern die erforderlichen Daten für eine exakte Berechnung der Standortkoordinaten. Eine Datenverarbeitungseinrichtung DVE übernimmt eingangsseitig nur den Kurswinkel der Fahrzeugnavigationsanlage FNA und den Geschwindigkeitswert v des Sensors RS. In einer Integrationsschaltung der Datenverarbeitunseinrichtung DVE werden die Werte der laufenden Geschwindigkeitsmessungen zum tatsächlich zurückgelegten Weg aufintegriert. Als Ergebnis werden genaue Standortkoordinaten erhalten, mit denen die Transformation der zugewiesenen Zieldaten, bezogen auf den Standort des Waffensystems durchgeführt werden kann.

Der Aufbau und die Funktion der Datenverarbeitungseinheit wird an einem Blockschaltbild in Fig. 2 beschrieben.

Die vom Geschwindigkeitssensor RS gelieferte Fahrzeuggeschwindigkeit v durchläuft vor der Verarbeitung ein Filter F. Im Zeittakt T wird die geglättete Geschwindigkeit durch einen Schalter S periodisch abgetastet und durch Multiplikation mit $\Delta t = T$ in einem Multiplizierer M1 die absolut zurückgelegte Distanz bestimmt.

Aus Kurswinkel und absoluter Distanz werden über Multiplikation mit den trigonometrischen Funktionen sin, cos in einem weiteren Multiplizierer M2 die in x und y zurückgelegten Wegabschnitte berechnet. Die Gesamtstrecken in x und y ergeben sich aus der Integration bzw. Summation über $\Delta$ Sx, $\Delta$ Sy in den Addierern A1 und A2.

Bezugszeichenliste

FNA = Fahrzeugnavigationsanlage
DVE = Datenverarbeitungseinrichtung
RS = Radar-oder Laser-Sensor
F = Filter
S = Schalter
M1,2 = Multiplizierer
A1,2 = Addierer
$\vartheta$ = Kurswinkel
v = Fahrzeuggeschwindigkeit
Sx, Sy = zurückgelegte Wegabschnitte
T = Zeittakt für Abtastung
x, y = Achsen im rechtwinkligen Korrdinatensystem

**Ansprüche**

1. Fahrzeugnavigationsanlage mit einer Einrichtung zur Bestimmung des Kurswinkels und der Fahrstrecke zur Orientierung des als Träger eines Waffensystems eingesetzten Fahrzeuges im Gefechtsfeld,

**dadurch gekennzeichnet** , daß die mit der eigenen Fahrzeugsnavigationsanlage ermittelten Standortkoordinaten zusätzlich zur Durchführung der Transformation der von einer zentralen Stelle gelieferten Zieldaten eines feindlichen Objektes in Anspruch genommen werden.

2. Fahrzeugnavigationsanlage nach Anspruch 1,

**dadurch gekennzeichnet**, daß bei jeder Standortänderung die Geschwindigkeit des Fahrzeuges laufend gemessen und in einer Integrationsschaltung, die Teil einer Datenverarbeitungseinrichtung (DVE) ist, zum tatsächlich zurückgelegten Weg aufintegriert wird.

3. Fahrzeugnavigationsanlage nach Anspruch 1 oder 2, **dadurch gekennzeichnet**, daß die Fahrzeuggeschwindigkeit mittels eines mit dem Dopplereffekt arbeitenden Radar-oder Lasersensors (RS) ermittelt wird.

4. Fahrzeugnavigationsanlage nach einem der vorhergehenden Ansprüche,

**dadurch gekennzeichnet**, daß die Datenverarbeitunseinrichtung (DVE) eingangsseitig mit dem Kurswinkel ($\vartheta$) der Fahrzeugnavigationsanlage - (FNA) und mit den Geschwindigkeitswerten (v) eines Geschwindigkeitssensors (RS) beaufschlagt ist.

5. Fahrzeugnavigationsanlage nach Anspruch 2 oder 4, **dadurch gekennzeichnet**, daß die Datenverarbeitungseinrichtung (DVE) ein Filter (F) zur Glättung der Geschwindigkeitswerte (v), eine Abtastvorrichtung (S), je einen Multiplizierer (M1 und M2) zur Berechnung der Teilwegstrecken ($\Delta$ s) und zur Richtungsbestimmung unter Verwendung des von der Fahrzeugnavigationsanlage glieferten Kurswinkels ($\vartheta$) durch Zerlegung in die Koordinatenwerte ($\Delta$ x und $\Delta$ y) enthält, und daß die Anteile ($\Delta$ x und $\Delta$ y) in getrennten Addierern (A1 und A2) zu den Gesamtanteilen ($S_x$ und $S_y$) der Wegstrecke aufsummiert werden.

6. Fahrzeugnavigationsanlage nach einem der vorhergehenden Ansprüche,

**dadurch gekennzeichnet**, daß die Datenverarbeitunsanlage (DVE) Teil der Fahrzeugnavigationsanlage (FNA) ist.

## FIG 1

```
┌──────────────┐
│    FNA       │  Kurswinkel φ
│(ohne Weggeber)│
└──────────────┘        ┌──────────┐
                        │          │  Sx , Sy    Zurückgelegte
    RS                  │DV-Einheit│────────────▶ Strecke in
┌──────────────┐        │          │             - x (Nord)
│Geschwindig-  │        └──────────┘             - y (West)
│keits-Sensor  │           DVE
└──────────────┘
```

## FIG 2

$$\Delta x = \Delta s \cos\varphi$$
$$\Delta y = \Delta s \cos\varphi$$
$$\Delta t = T$$
$$v \cdot \Delta t = \Delta s$$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 013 906  (TEXAS INSTRUMENTS)<br>* Figur 1; Ansprüche 1,2 * | 1,2 | F 41 G    5/14<br>G 01 S    5/00 |
| | --- | | |
| A | DE-A-2 829 577  (SIEMENS)<br><br>* Figur 1; Seite 10, Zeilen 25-30 * | | |
| | --- | | |
| A | DE-A-3 310 111  (TELDIX)<br><br>* Figur 1; Zusammenfassung * | | |
| | ----- | | |

|  | RECHERCHIERTE SACHGEBIETE (Int. Cl.4) |
|---|---|
| | F 41 G    3/00<br>F 41 G    5/14<br>G 01 S    5/00 |

Der vorliegende Recherchenbericht wurde für alle Patentansprüche erstellt.

| Recherchenort | Abschlußdatum der Recherche | Prüfer |
|---|---|---|
| BERLIN | 28-JL-1986 | BREUSING J. |